# EUROPÄISCHE PATENTANMELDUNG

(11) **EP 3 000 516 A1**
(43) Veröffentlichungstag der Anmeldung: **30.03.2016**
(21) Anmeldenummer: 15002742.3
(22) Anmeldetag: 23.09.2015
(51) Int. Cl.: B01D 11/02, B02C 19/18, B29B 17/04, B08B 3/08, B28B 3/12

(54) **VERFAHREN ZUM REINIGEN VON FESTSTOFFEN MITTLES LÖSUNGSMITTEL-EXTRAKTION BZW SCHOCKWELLEBEHANDLUNG**

(30) Priorität: 24.09.2014 DE 102014013856
(71) Anmelder: Beckmann, Jörg, 31139 Hildesheim (DE)
(72) Erfinder: Beckmann, Jörg, 31139 Hildesheim (DE)
(74) Vertreter: Friedrich, Andreas

(57) **Zusammenfassung**

Die Erfindung betrifft ein Verfahren zum Reinigen und/oder Trennen von Feststoffen 4, die Verunreinigungen aufweisen, bei dem die Feststoffe 4 in ein Lösungsmittel 6 für die Verunreinigungen in einen Behälter 2 eingebracht werden, wodurch nach dem Einbringen der Feststoffe 4 ein Unterdruck auf das Lösungsmittel ausgeübt wird.

## Beschreibung

Die Erfindung betrifft ein Verfahren zum Reinigen und/oder Trennen von Feststoffen, die Verunreinigungen aufweisen.

Die Erfindung betrifft zudem ein Verfahren zum Zerkleinern von Feststoffen in einem Zerkleinerungsbehälter. Die Erfindung betrifft zudem eine Vorrichtung zum Durchführen eines derartigen Verfahrens.

Aus dem Stand der Technik ist es bekannt, insbesondere zum Zerkleinern von Kunststoffen sogenannte Schockwellenverfahren zu verwenden. Dabei wird durch eine elektrische Vorrichtung in einem Behälter mit einer Flüssigkeit, beispielsweise Wasser, eine elektrische Entladung herbeigeführt. Diese Entladung erzeugt in dem Behälter eine Schockwelle in der Flüssigkeit. Sobald diese auf das in die Flüssigkeit eingebrachte Material trifft, wird dieses zerkleinert. Eine derartige Vorrichtung ist beispielsweise aus der DE 195 43 914 C1 bekannt. Durch Änderung der Parameter der Entladung kann optimal Einfluss auf die den jeweiligen Einsatzzweck am besten geeigneten Randbedingungen und Parameter genommen werden.

Aus der DE 195 34 232 C2 ist es beispielsweise bekannt, die Form der Spannungsspitzen, durch die der elektrische Funkenschlag hervorgerufen wird, auf das jeweilige Material abzustimmen, so dass die Entladung nicht oder nicht nur in der Flüssigkeit, sondern zumindest auch in dem zu zerkleinernden Feststoff selbst erzeugt wird. Aus der US 5,758,831 hingegen ist eine Vorrichtung bekannt, bei der der Behälter einen Innenraum aufweist, der ellipsenförmig ausgebildet ist. Diese Ellipse verfügt über zwei Brennpunkte, wobei das zu zerkleinernde Material in der Nähe des einen Brennpunktes und die Elektroden so positioniert sind, dass der Lichtbogen des Funkenschlags im zweiten Brennpunkt der Ellipse entsteht. Auf diese Weise sollen die erzeugten Druckwellen möglichst optimal auf das zu zerkleinernde Material geleitet werden.

Die zu zerkleinernden Materialien, insbesondere Kunststoffe und Gummimehle sind häufig mit Verunreinigungen, beispielsweise Prozessölen, behaftet. Zusätzlich oder alternativ dazu sind beispielsweise viele der zu zerkleinernden Kunststoffe aus zwei oder mehreren unterschiedlichen Materialien zusammengesetzt und/oder miteinander verklebt. Um das bei der Zerkleinerung entstehende Granulat der Wiederverwertung zu zuführen, ist jedoch eine Sortenreinheit der Kunststoffe notwendig oder zumindest sehr vorteilhaft.

Aus dem Stand der Technik ist es daher beispielsweise bekannt, als Lösungsmittel Aceton oder CO₂ zu verwenden, um beispielsweise die Prozessöle und andere Verunreinigungen aus den zu zerkleinernden Materialien herauszulösen.

Nachteilig ist jedoch, dass das Reinigungsmittel nicht immer in alle gegebenenfalls winzigen Kapillaren und Vertiefungen in den zu zerkleinernden Materialien eindringen kann und insbesondere bei miteinander verklebten Materialien nicht mit dem zu lösenden Klebstoff in ausreichendem Umfang in Kontakt kommt.

Der Erfindung liegt daher die Aufgabe zugrunde, ein Verfahren bereitzustellen, mit dem diese Nachteile behoben werden.

Die Erfindung löst die gestellte Aufgabe durch ein Verfahren zum Reinigen und/oder Trennen von Feststoffen, die Verunreinigungen aufweisen, bei dem die Feststoffe in ein Lösungsmittel für die Verunreinigungen in einem Behälter eingebracht werden, und das sich dadurch auszeichnet, dass nach dem Einbringen der Feststoffe ein Druck, der auf das Lösungsmittel wirkt, reduziert wird. Dabei versteht sich von selbst, dass das Lösungsmittel die Feststoffe nicht angreift oder löst.

Feststoffe, die mit dem erfindungsgemäßen Verfahren gereinigt und/oder getrennt werden können, sind beispielsweise Stoffe, die aus Kunststoffen oder einer Kombination oder einem Materialverbund unterschiedlicher Werkstoffe vorliegen können. Dabei können Kombinationen und/oder Materialverbünde von unterschiedlichen Kunststoffen oder beispielsweise Kombinationen oder Materialverbünde von einem Kunststoff mit beispielsweise Glas oder Metall verwendet werden. Natürlich sind auch Kombinationen dieser Stoffe, Stoffkombinationen und/oder Stoffverbünde möglich.

Der Erfindung liegt die Erkenntnis zugrunde, dass der auf das Lösungsmittel ausgeübte reduzierte Druck aufgrund der geringen Kompressibilität des Lösungsmittels auf die in dem Lösungsmittel befindlichen Feststoffe übertragen wird. Dadurch wird eine Zugkraft auf die zu reinigen und/oder zu trennenden Feststoffe, die beispielsweise in Form eines Granulates vorliegen können, aufgebracht. Die kapillaren Strukturen der Feststoffe werden dadurch erweitert und gegebenenfalls miteinander verklebte Materialien auseinandergezogen. Dadurch kann das Lösungsmittel direkt an die gewünschten Stellen vordringen und in die zu reinigenden und/oder zu trennenden Feststoffe eindringen.

Mit der Formulierung, dass die zu reinigenden und/oder trennenden Feststoffe in das Lösungsmittel in den Behälter eingebracht werden, soll vorliegend keine Reihenfolge vorgegeben werden. Es ist durchaus möglich, zunächst das Lösungsmittel in den Behälter zu füllen und anschließend die Feststoffe einzubringen. Alternativ ist es auch möglich, zunächst die Feststoffe in den Behälter einzubringen und anschließend das Lösungsmittel einzuleiten. Es ist sogar denkbar, zunächst die Feststoffe mit dem Lösungsmittel zu vermischen und anschließend dieses Gemisch in den Behälter zu füllen. Die gewählte Ausführungsform hängt dabei vom weiteren Prozessablauf, den verwendeten Lösungsmitteln und den Feststoffen ab, Alle diese Ausführungsformen werden unter der gewählten Formulierung verstanden.

Als vorteilhaft hat sich herausgestellt, wenn der Druck auf maximal 0,5 bar, bevorzugt maximal 0,25 bar, besonders bevorzugt maximal 0,1 bar reduziert wird. Je stärker dieser Unterdruck, der durch die Reduzierung des Druckes erreicht wird, gewählt und erzeugt wird, desto größer ist die dadurch auf die zu reinigenden und/oder zu trennenden Feststoffe aufgebrachte Kraft und dadurch auch die Aufweitung der Kapillaren und allgemeine Vergrößerung der von dem Lösungsmittel benetzten Oberfläche. Der Druck kann durch aus dem Stand der Technik bekannte Verfahren und Vorrichtungen reduziert werden. Vorzugsweise liegt der Druck oberhalb des Gasdruckes des Lösungsmittels.

Vorzugsweise handelt es sich bei dem Lösungsmittel um Wasser, Ethanol, Chloroform oder Aceton oder ein Gemisch mehrerer dieser und/oder anderer Lösungsmittel. Wasser, Ethanol und Aceton sind als dazu verwendbare Flüssigkeiten aus dem Stand der Technik bereits bekannt, wobei Aceton den Vorteil der erhöhten Reinigungskraft insbesondere zum Herauslösen der bereits benannten Prozessöle und anderer Verunreinigungen aufweist, gleichzeitig jedoch einen erhöhten Handhabungsaufwand und apparativen Aufwand sowie erhöhte Kosten zur Folge hat. Bei Wasser, Ethanol und Aceton handelt es sich um polare Lösungsmittel, wobei Wasser und Ethanol protisch sind, während Aceton aprotisch ist. Chloroform ist ein unpolares aprotisches Lösungsmittel.

Vorteilhafterweise bestehen die zu reinigenden und/oder zu trennenden Feststoffe aus wenigstens zwei miteinander verbundenen Materialien, insbesondere Kunststoffen. Diese sind vorzugsweise miteinander verklebt. Durch den reduzierten Druck wird eine Zugkraft auf diese Partikel aufgebracht, so dass die beiden Bestandteile auseinandergezogen werden und das Lösungsmittel in die sich so ergebenen Zwischenräume und Kapillaren eindringen kann. Insbesondere von Vorteil ist es, wenn in diesem Fall Aceton oder ein anderes Lösungsmittel verwendet wird, so dass diese Flüssigkeit möglichst großflächig mit dem gegebenenfalls zu lösenden Klebstoff, der die beiden unterschiedlichen Materialien verbindet, in Kontakt kommen kann.

Die zu reinigenden und zu trennenden Feststoffe können auch Metalle, insbesondere Metallmehle sein, die von anhaftenden oder enthaltenen Stoffen und Verbindungen befreit werden sollen. Auch Materialien, die beispielsweise für die Verwendung in 3-Druckern vorgesehen sind, können durch das erfindungsgemäße Verfahren bearbeitet werden.

In einer bevorzugten Ausgestaltung des Verfahrens steht der Behälter mit wenigstens einem Zweitbehälter in Fluidverbindung und der Druck, der auf das Lösungsmittel wirkt, wird in dem Zweitbehälter reduziert. Dabei ist es von Vorteil, wenn die Fluidverbindung vollständig mit Lösungsmittel gefüllt ist, Vorzugsweise ist die Fluidverbindung mit einer Vorrichtung versehen, durch die sie geschlossen und geöffnet werden kann. Auf diese Weise können die wenigstens zwei Behälter miteinander verbunden und voneinander getrennt werden. Dadurch können unterschiedliche Behälter mit unterschiedlichen Lösungsmittel und/oder unterschiedlichen Drücken verwendet werden. Auf diese Weise ist eine optimale Anpassung an die erforderlichen Verfahrensparameter möglich. Weiter ist von Vorteil, wenn auch der Behälter selbst vollständig mit dem Lösungsmittel erfüllt wird. Auf diese Weise wird das Reinigen und/oder Trennen der Feststoffe und die Erzeugung des Unterdruckes baulich getrennt. So wird auf diese Weise verhindert, dass zu reinigende und/oder zu trennende Feststoffe und Partikel in die Pumpe gelangen und zu Beschädigungen, Fehlfunktionen oder Verstopfungen führen können.

In besonderen Fällen können in dem Behälter und in dem Zweitbehälter unterschiedliche Lösungsmittel oder Flüssigkeiten verwendet werden.

In einer bevorzugten Ausgestaltung des Verfahrens ist der Behälter und/oder der Zweitbehälter nicht vollständig mit Lösungsmittel gefüllt. In diesem Fall befindet sich im Innern folglich eine bestimmte Menge eines Gases, das beispielsweise Luft sein kann. Der Druck wird in diesem Fall vorteilhafterweise dadurch reduziert, dass zumindest ein Teil dieses Gases aus dem Behälter und/oder dem Zweitbehälter abgesaugt wird. Natürlich ist es auch möglich, Behälter und/oder den Zweitbehälter vollständig mit Lösungsmittel zu füllen und einen Teil des Lösungsmittels abzusaugen, um den Druck zu reduzieren. Dazu werden jedoch gegebenenfalls aufwendigere Pumpen benötigt wodurch die Kosten der Anlage erhöht werden könnten.

Sofern der Behälter und/oder der Zweitbehälter nicht vollständig mit Lösungsmittel gefüllt sind und daher eine bestimmte Menge eines Gases beinhalten, ist es von Vorteil, durch Absaugen dieses Gases den Unterdruck zu erzeugen. Gase weisen in der Regel eine deutlich größere Kompressibilität als Flüssigkeiten auf und sind daher auch in der Lage, auf angelegte Unterdrücke durch Expansion zu reagieren. Würde in diesem Fall der Druck durch Absaugen der Flüssigkeit reduziert, würde zumindest ein Teil dieses Unterdruckes dadurch aufgefangen, dass das in dem Zerkleinerungsbehälter und/oder Zweitbehälter enthaltene Gas expandiert, so dass nicht die volle Wirkung der Pumpe auf die zu zerkleinernden Feststoffe übertragen werden kann.

Die Erfindung löst die gestellte Aufgabe zudem durch ein Verfahren zum Zerkleinern von Feststoffen in einem Zerkleinerungsbehälter, wobei das Verfahren folgende Schritte aufweist:
a) Reinigen und/oder Trennen der Feststoffe durch ein hier beschriebenes Verfahren,
b) Bereitstellen der zu zerkleinernden Feststoffe in einer Flüssigkeit im Zerkleinerungsbehälter,
c) Erzeugen wenigstens einer Schockwelle durch elektrischen Funkenschlag in der Flüssigkeit.

Da die auf diese Weise zu zerkleinernden Feststoffe bevor sie der Schockwelle ausgesetzt sind durch das hier beschriebene Verfahren gereinigt und/oder getrennt wurden, liegen sie in deutlich größerer Sortenreinheit vor, so dass das durch das Zerkleinern der Feststoffe erzeugte Granulat ebenfalls eine sehr hohe Sortenreinheit und damit einen sehr geringen Weiterverarbeitungsaufwand aufweist.

In dem Zerkleinerungsbehälter liegt ein Flüssigkeit-Feststoff-Gemisch vor, dessen Menge und Zusammensetzung prozess- und materialabhängig ist. Insbesondere wird das Verhältnis von Flüssigkeit-Feststoff-Gemisch zu dem in dem Behälter enthaltenen Glas eingestellt. Bevor das hier beschriebene Verfahren durchgeführt werden kann, ist es gegebenenfalls notwendig, eine grobe Zerkleinerung der Feststoffe auf die für den Prozess erforderliche Ausgangsgröße durchzuführen. Diese Ausgangsgröße ist dabei sowohl von den Materialien der Feststoffe als auch beispielsweise von der gewünschten Granulatgröße des Endproduktes abhängig.

Im Verfahrensschritt c kann die wenigstens eine Schockwelle als Einzelimpulse, als Impulsfolge oder als eine Kombination von Einzelimpulsen und unterschiedlichen Impulsgruppen ausgeführt werden.

Vorzugsweise wird die Flüssigkeit nach dem Erzeugen der wenigstens einen Schockwelle gereinigt und dem Zerkleinerungsbehälter und/oder dem Zweitbehälter wieder zugeführt. Auf diese Weise werden die zerkleinerten Feststoffe der Flüssigkeit entzogen und können der Weiterverarbeitung, insbesondere der Wiederverwertung von Kunststoffen, zugeführt werden. Die Flüssigkeit selbst wird erneut in die jeweiligen Behälter eingefüllt, so dass die Abfallmengen und die damit verbundenen Kosten reduziert oder gar völlig vermieden werden können.

Der Aufwand zur Durchführung eines derartigen Verfahrens kann dadurch reduziert werden, dass der Zerkleinerungsbehälter, in dem die Schockwelle erzeugt wird, der Behälter ist, in dem auch das Reinigen und/oder Trennen der Feststoffe unter dem Einfluss des reduzierten Druckes geschieht. Dadurch wird verhindert, dass die nach dem Reinigen und/oder Trennen vorliegenden Feststoffe in einen weiteren Zerkleinerungsbehälter umgefüllt werden müssen. Als besonders vorteilhaft hat sich zudem herausgestellt, wenn die Flüssigkeit, in der die Schockwelle erzeugt wird, das Lösungsmittel ist, das auch zum Reinigen und/oder Trennen der Feststoffe verwendet wird. In diesem Fall kann das gesamte Verfahren in einem einzigen Gefäß stattfinden, ohne dass die Feststoffe und die Flüssigkeit umgefüllt transportiert oder auf sonstige Weise bewegt werden müssen. Allerdings sind nicht alle Lösungsmittel für ein derartiges Verfahren geeignet, insbesondere wenn das Lösungsmittel beispielsweise brennbar ist.

Dabei kann es von Vorteil sein, wenn nach dem Reinigen und/oder Trennen der Feststoffe unter dem Einfluss des reduzierten Druckes ein Druckausgleich zwischen dem Innern des Behälters und der Umgebung stattfindet. Alternativ dazu ist es auch möglich, den Unterdruck im Innern des Behälters aufrecht zu erhalten und in diesem Zustand die Schockwelle in der Flüssigkeit, also dem Lösungsmittel, zu erzeugen. Die durch den reduzierten Druck aufgeweiteten Kapillaren und kleinen Zwischenräume in den nun gereinigten und/oder getrennten Festkörpern bleiben auf diese Weise geweitet und geöffnet, so dass auch die Schockwelle eine besonders große Angriffsfläche vorliegt und so ein besonders gutes Zerkleinerungsergebnis erreicht wird. Insbesondere in diesem Fall ist es von Vorteil, wenn der reduzierte Druck in dem bereits angesprochenen Zweitbehälter erzeugt wird, der mit dem Behälter in einer Fluidverbindung steht. Es wird auf diese Weise verhindert, dass die Pumpe, die beispielsweise für die Erzeugung des reduzierten Druckes verantwortlich ist, von dem erheblichen Drücken der Schockwelle getroffen und gegebenenfalls beschädigt wird.

Die Erfindung löst die gestellte Aufgabe zudem durch eine Vorrichtung zum Durchführen des Verfahrens. Diese Vorrichtung unterscheidet sich von aus dem Stand der Technik bekannten Vorrichtungen insbesondere dadurch, dass sie eine Vorrichtung zum Erzeugen des reduzierten Druckes, beispielsweise eine Pumpe, aufweist oder zumindest mit einer solchen verbindbar ist. Hier könnten unterschiedlichste Pumpen, die per se aus dem Stand der Technik bekannt sind, zum Einsatz kommen, aber auch andere Möglichkeiten verwendet werden, den auf das Lösungsmittel wirkenden Druck zu reduzieren.

Die Vorrichtung kann zur Erzeugung des elektrischen Funkenschlages über eine oder mehrere Elektroden verfügen, die gegebenenfalls elektrisch teilweise isoliert sein können.

Durch ein erfindungsgemäßes Verfahren werden Verklebungen in den zu reinigenden und/oder zu trennenden Feststoffen besser gelöst und allgemein die Wirkung des Lösungsmittels verbessert, was sich insbesondere in der höheren Konzentration der extrahierten Stoffe bemerkbar macht. So konnten deutlich mehr aliphatische Kohlenwasserstoffe, Weichmacher und Antioxidantien aus einem Verbundwerkstoff gelöst werden, als dies beispielsweise durch die Verwendung überkritischen Kohlendioxids erreicht wurde. Auch Monomere und andere für die Herstellung von Kunststoffen, wie beispielsweise Reifen, benötigte Substanzen konnten so wiedergewonnen werden, dass sie dem Produktionsprozess wieder zur Verfügung gestellt werden können. Grundsätzlich sind alle Bestandteile des Extraktes wiederverwendbar.

Die hier beschriebenen Verfahren können bei unterschiedlichsten Temperaturen durchgeführt werden. Diese hängen unter anderem von den Feststoffen ab, die zu reinigen und/oder zu trennen sind und von den Extraktionsstoffen, die durch das Verfahren den Feststoffen entzogen beziehungsweise aus diesen extrahiert werden sollen. Vorzugsweise ist die verwendete Temperatur des Lösungsmittels größer als 10°C. Je nach Stoff Kombination können auch erhöhte Temperaturen verwendet werden. So kann beispielsweise als Lösungsmittel auch überkritisches Wasser verwendet werden. Dafür ist es von Vorteil, wenn die Temperatur, bei der das hier beschriebene Verfahren durchgeführt wird, größer ist als 360°C.

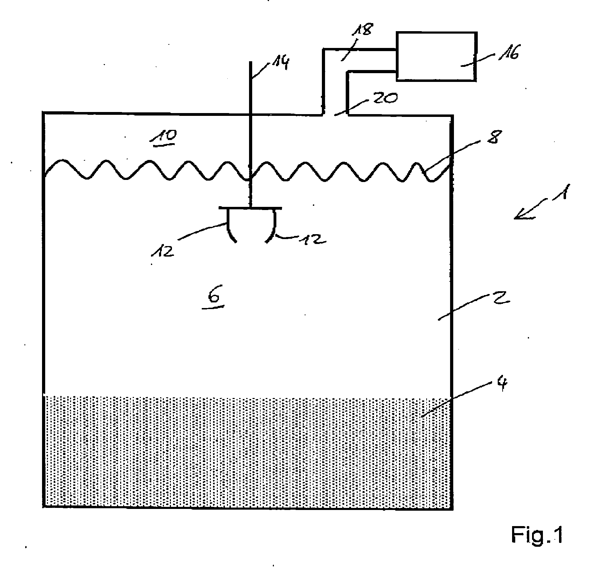

Mit Hilfe der beiliegenden Zeichnungen wird nachfolgend ein Ausführungsbeispiel der vorliegenden Erfindung näher erläutert. Es zeigt
- Figuren 1 bis 6 -: schematische Darstellungen von Vorrichtungen zum Durchführen eines Verfahrens gemäß unterschiedlichen Ausführungsbeispielen der vorliegenden Erfindung.

Figur 1 zeigt die schematische Darstellung einer Vorrichtung 1 zum Durchführen eines Verfahrens gemäß einem Ausführungsbeispiel der vorliegenden Erfindung. Sie verfügt über einen Behälter 2, in dem sich zu reinigende und/oder zu trennende Feststoffe 4 befinden. Die Feststoffe 4 sind in einem Lösungsmittel 6 enthalten, das den Behälter 2 bis zu einer durch eine Wellenlinie gezeigten Füllhöhe 8 füllt. Oberhalb dieser Füllhöhe 8 befindet sich ein Gas 10, das beispielsweise Luft sein kann.

Die Vorrichtung 1 verfügt über Elektroden 12, die in das Lösungsmittel 6 hineinragen und an einer Halterung 14 befestigt sind. Im gezeigten Ausführungsbeispiel sind zwei Elektroden 12 vorhanden, andere Anzahlen sind jedoch auch möglich. Über die Halterung 14, die wenigstens zwei elektrisch voneinander isolierte Leiter umfasst, sind die Elektroden 12 mit einer Spannungsquelle verbunden, die in Figur 1 nicht dargestellt ist. Die Spannungsquelle ist eingerichtet, kurzfristig eine sehr hohe Spannung bereitzustellen, so dass zwischen den beiden Elektroden 12 ein Lichtbogen entsteht, durch den wenigstens eine Schockwelle in dem Lösungsmittel 6 erzeugt wird. Diese verläuft durch das Lösungsmittel 6 und trifft so auf die zu zerkleinernden Feststoffe 4.

Die in Figur 1 dargestellte Vorrichtung 1 verfügt zudem über eine Pumpe 16, die über eine Pumpleitung 18 mit dem Behälter 2 verbunden ist. Dabei verfügt der Behälter 2 über eine Auslassöffnung 20, an der die Pumpleitung 18 angeschlossen ist. Im Ausführungsbeispiel, das in Figur 1 dargestellt ist, ist die Auslassöffnung oberhalb der Füllhöhe 8 angeordnet, so dass durch die Pumpe 16 Gas 10 aus dem Behälter 2 abgesaugt werden kann. Dadurch entsteht ein Unterdruck, der auf das Lösungsmittel 6 wirkt und übertragen wird. Da das Lösungsmittel 6 eine sehr geringe Kompressibilität und damit auch eine sehr geringe Expandierbarkeit aufweist, wird der so erzeugte Unterdruck direkt auf die Feststoffe 4 übertragen, wobei es zu einer Aufweitung von Kapillaren und anderen Vertiefungen kommt.

Es ist auch möglich, die in Figur 1 dargestellte Vorrichtung ohne Elektroden 12 und damit ohne die Möglichkeit, einen elektrischen Lichtbogen zu erzeugen, vorzusehen. In diesem Fall können die Feststoffe 4 in dem Behälter 2 lediglich gereinigt und/oder getrennt werden.

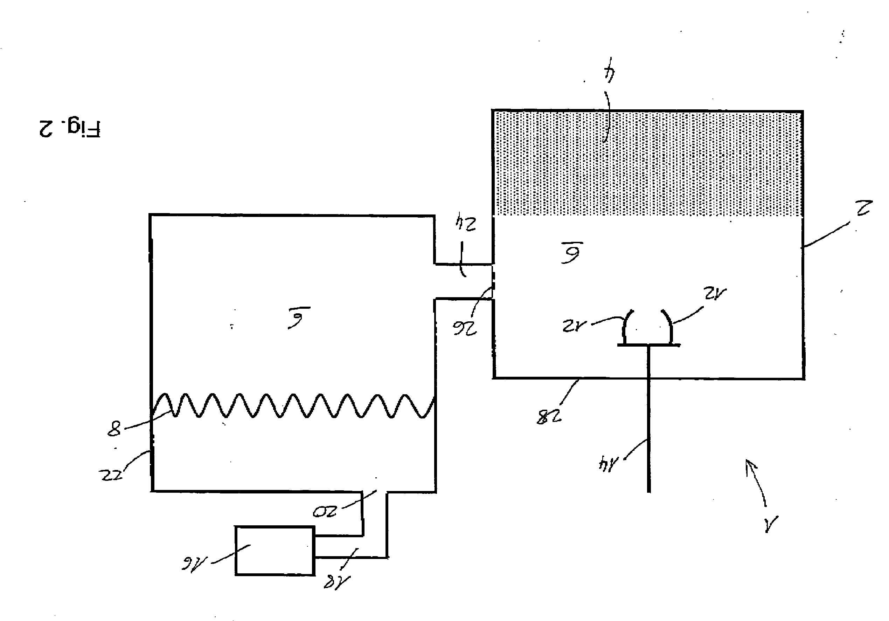

Figur 2 zeigt eine ähnliche Vorrichtung 1, die ebenfalls über den Behälter 2 und zwei an der Halterung 14 positionierte Elektroden 12 verfügt. Auch hier befinden sich im Behälter 2 die zu zerkleinernden Feststoffe 4, die sich in dem Lösungsmittel 6 befinden.

Anders als im in Figur 1 gezeigten Ausführungsbeispiel verfügt die Vorrichtung 1 jedoch zusätzlich über einen Zweitbehälter 22, der über eine Fluidverbindung 24 mit dem Behälter 2 verbunden ist. In der Fluidverbindung 24 befindet sich im in Figur 2 gezeigten Ausführungsbeispiel ein Sieb 26, durch das verhindert wird, dass die Feststoffe 4 oder Teile der Feststoffe 4 aus dem Behälter 2 in den Zweitbehälter 22 gelangen können.

Die Füllhöhe 8, bis zu der die Vorrichtung 1 mit Lösungsmittel 6 gefüllt ist, liegt im gezeigten Ausführungsbeispiel oberhalb eines Deckels 28 des Behälters 2. Dies bedeutet, dass der Behälter 2 vollständig mit Lösungsmittel 6 gefüllt ist. Dadurch werden die Schockwellen, die durch die Elektroden 12 erzeugt werden, besser auf die Feststoffe 4 geleitet. Die Pumpe 16 ist über die Pumpleitung 18 nun mit dem Zweitbehälter 22 verbunden, der über die Auslassöffnung 20 verfügt. Damit ist die Pumpe 16 von dem Behälter 2, in dem sich die Schockwellen ausbreiten, baulich getrennt und somit vor eventuellen Beschädigungen geschützt.

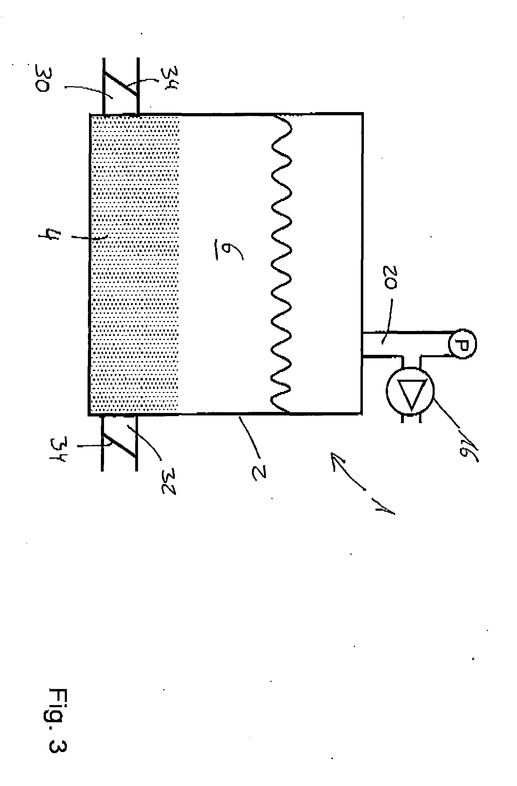

Figur 3 zeigt die schematische Darstellung der Vorrichtung 1, die den Behälter 2, die Auslassöffnung 20 und die Pumpe 16 aufweist. Anders als die in den Figuren 1 und 2 dargestellten Vorrichtungen 1 verfügt die in Figur 3 dargestellte Vorrichtung 1 über eine Zuleitung 30 sowie eine Ableitung 32, die jeweils durch ein Ventil 34 verschließbar ausgebildet sind. Durch die Zuleitung 30 gelangt beispielsweise ein Gemisch aus Lösungsmittel 6 und Feststoffen 4 in den Behälter 2. Die Vorrichtung 1 in Figur 3 verfügt nicht über Elektroden, sodass in dem Behälter 2 keine Schockwelle erzeugt werden kann. Es handelt sich lediglich um eine Vorrichtung 1 zum Reinigen und/oder Trennen der Feststoffe 4, wobei eine Zerkleinerung nicht stattfindet.

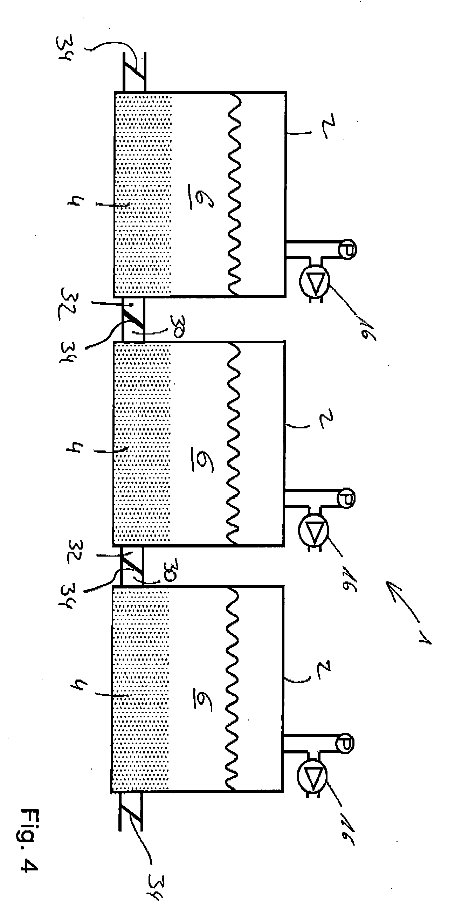

Figur 4 zeigt eine Vorrichtung 1, die aus mehreren der in der Figur 3 gezeigten Vorrichtungen 1 besteht. Sie verfügt über drei Behälter 2, in denen jeweils über eine Pumpe 16 ein Unterdruck erzeugbar ist. Die Kombination aus Lösungsmittel 6 und Feststoffen 4 gelangt durch die jeweilige Ableitung 32 aus einem der Behälter 2 in die Zuleitung 30 des anschließenden Behälters 2, sodass die Feststoffe 4 in den verschiedenen Behältern 2 behandelt werden. Dabei ist es möglich, durch die Pumpen 16 unterschiedliche Drücke in den jeweiligen Behältern 2 anzulegen und/oder unterschiedliche Lösungsmittel 6 zu verwenden. Durch die jeweiligen Ventile 34 kann die Vorrichtung 1 sowohl im kontinuierlichen Betrieb als auch im schrittweisen Betrieb, also im "batch"-Betrieb verwendet werden.

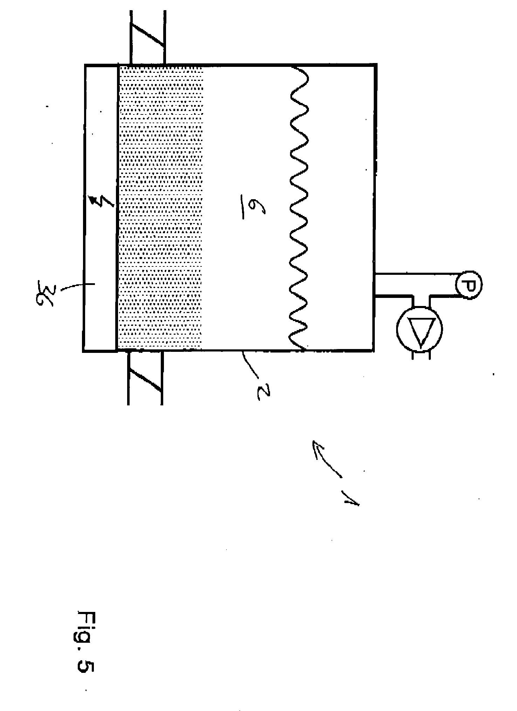

Figur 5 zeigt die in Figur 3 gezeigte Vorrichtung 1, in der nun ein zusätzliches Modul 36 vorhanden ist, das nur schematisch dargestellt ist. In diesem Modul sind die Elektroden 12 und die vorgesehene Halterung 14 enthalten, sodass durch diese schematische Art der Darstellung lediglich dargestellt werden soll, dass in der Flüssigkeit 6 im Behälter 2 eine Schockwelle durch eine elektrische Entladung erzeugt werden kann.

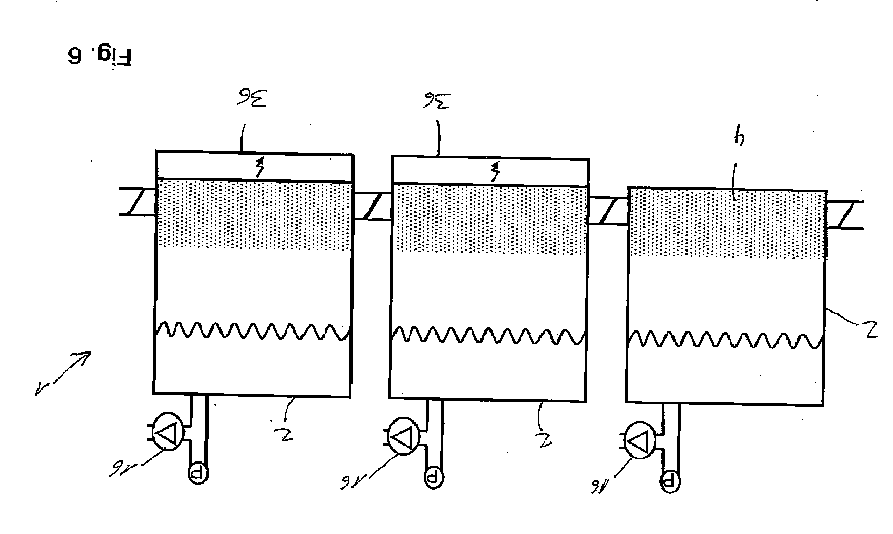

Figur 6 zeigt eine Kombination aus einer in Figur 3 gezeigten Vorrichtung und zwei in Figur 5 gezeigten Vorrichtungen. Die in Figur 6 gezeigte Vorrichtung 1 verfügt über drei Behälter 2, die jeweils über eine Pumpe 16 verfügen, sodass innerhalb der Behälter 2 ein gegebenenfalls unterschiedlicher Unterdruck angelegt werden kann. Während der ganz links dargestellte Behälter 2 lediglich zum Reinigen der Feststoffe 4 vorgesehen ist, verfügen die beiden rechten Behälter 2 über das Modul 36, sodass auch elektrische Entladungen und damit Schockwellen erzeugt werden können. Diese Zusammensetzung der unterschiedlichen Teile der Vorrichtung 1 ist nur exemplarisch. Selbstverständlich können auch andere Anzahlen von Behältern und andere Anordnungen von Behältern mit oder ohne Modul 36 je nach gewünschtem Verfahrensablauf kombiniert werden.

### Bezugszeichenliste

- 1: Vorrichtung
- 2: Behälter
- 4: Feststoffe
- 6: Lösungsmittel
- 8: Füllhöhe
- 10: Gas
- 12: Elektrode
- 14: Halterung
- 16: Pumpe
- 18: Pumpleitung
- 20: Auslassöffnung
- 22: Zweitbehälter
- 24: Fluidverbindung
- 26: Sieb
- 28: Deckel
- 30: Zuleitung
- 32: Ableitung
- 34: Ventil
- 36: Modul

## Patentansprüche

1. Verfahren zum Reinigen und/oder Trennen von Feststoffen (4), die Verunreinigungen aufweisen, bei dem die Feststoffe (4) in einem Lösungsmittel (6) für die Verunreinigungen in einen Behälter (2) eingebracht werden, **dadurch gekennzeichnet, dass** nach dem Einbringen der Feststoffe (4) ein Druck, der auf das Lösungsmittel (6) wirkt, reduziert wird,

2. Verfahren nach Anspruch 1, **dadurch gekennzeichnet, dass** der Druck auf maximal 0,5 bar, bevorzugt maximal 0,25 bar, besonders bevorzugt maximal 0,1 bar reduziert wird.

3. Verfahren nach einem der vorstehenden Ansprüche, **dadurch gekennzeichnet, dass** das Lösungsmittel Wasser, Ethanol, Chloroform oder Aceton oder ein Gemisch mehrerer dieser Lösungsmittel ist.

4. Verfahren nach einem der vorstehenden Ansprüche, **dadurch gekennzeichnet, dass** die zu reinigenden und/oder zu trennenden Feststoffe (4) aus wenigstens zwei miteinander verbundenen, insbesondere verklebten, Materialien, insbesondere Kunststoffen, bestehen.

5. Verfahren nach einem der vorstehenden Ansprüche, **dadurch gekennzeichnet, dass** der Behälter (2) mit einem Zweitbehälter (22) über eine Fluidverbindung (24) verbunden ist und der Unterdruck in dem Zweitbehälter (22) erzeugt wird.

6. Verfahren nach einem der vorstehenden Ansprüche, **dadurch gekennzeichnet, dass** der Behälter (2) und/oder der Zweitbehälter (22) nicht vollständig mit Lösungsmittel (6) gefüllt ist und der Unterdruck erzeugt wird, indem ein Gas aus dem Behälter (2) und/oder dem Zweitbehälter (22) abgesaugt wird,

7. Verfahren zum Zerkleinern von Feststoffen (4) in einem Zerkleinerungsbehälter, wobei das Verfahren die folgenden Schritte aufweist:
a) Reinigen und/oder Trennen der Feststoffe (4) durch ein Verfahren nach einem der vorstehenden Ansprüche,
b) Bereitstellen der zu zerkleinernden Feststoffe (4) in einer Flüssigkeit in dem Zerkleinerungsbehälter,
c) Erzeugen wenigstens einer Schockwelle durch elektrischen Funkenschlag in der Flüssigkeit (6).

8. Verfahren nach Anspruch 7, **dadurch gekennzeichnet, dass** die Flüssigkeit nach dem Erzeugen der wenigstens einen Schockwelle gereinigt und dem Zerkleinerungsbehälter wieder zugeführt wird.

9. Vorrichtung (1) zum Durchführen eines Verfahrens nach einem der vorstehenden Ansprüche.
